# EUROPEAN PATENT SPECIFICATION

(11) **EP 2 268 496 B1**
(45) Date of publication and mention of the grant of the patent: **20.03.2013**
(21) Application number: 09738044.8
(22) Date of filing: 22.04.2009
(51) Int. Cl.: B60G 17/06

(54) **CONTROL DEVICE FOR A VARIABLE DAMPER**
STEUERVORRICHTUNG FÜR EINEN VARIABLEN DÄMPFER
DISPOSITIF DE COMMANDE POUR UN AMORTISSEUR VARIABLE

(30) Priority: 29.04.2008 IT MI20080786
(43) Date of publication of application: 05.01.2011
(73) Proprietor: Politecnico di Milano, 20133 Milano (IT); Università degli studi di Bergamo, 24129 Bergamo (IT)
(72) Inventor: SAVARESI, Sergio Matteo, I-26100 Cremona (IT); SPELTA, Cristiano, I-20052 Monza (IT)
(74) Representative: Ciceri, Fabio
(86) International application number: PCT/EP2009/054801
(87) International publication number: WO 2009/133000

(56) References cited:
- EP-A- 1 172 239
- FR-A- 2 802 469
- GB-A- 2 273 580
- GB-A- 2 279 425
- GB-A- 2 346 592
- US-A- 5 390 121
- US-A- 5 632 503
- US-A1- 2003 160 369
- US-B1- 6 502 837

## Description

The present invention relates to a method and system for allowing a user to set a damping curve of electronic shock absorber particularly, but not exclusively, for ground vehicles in accordance, respectively, with the preamble of claim 1 and 13.

The present invention also relates to an electronic programmable shock absorber in accordance to the preamble of claim 17.

In the present description, the term of damping curve refers to the dynamical response of a shock absorber during both compression and rebound, whenever the shock absorber is excited.

As known, suspensions may be divided into the following types:
- passive: consisting of springs and mechanical shock absorbers whose damping curve is selected in the design step by the manufacturer and it may be changed by acting on appropriate mechanical control in order to obtain a limited number of settings; and
- semi-active: consisting of springs and electronic shock absorbers whose damping curve monitors the vehicle dynamics (such as chassis dynamics and wheel dynamics) and according to them a minimum or maximum damping is selected to obtain a limited set of possible settings.

In systems normally available on the market where it is possible to choose between the sport setting and the comfort setting, what are changed are the parameters of algorithms aiming at optimizing the sport and comfort respectively.

In particular, as regards the different type of adjustable shock absorbers, which have as a peculiar feature that of varying their damping coefficient according to the control signal, the following types may be distinguished:
- CDC (continuously damping control) shock absorbers, whose operation is based on the variation of the sizes of orifices connecting the top and bottom chamber of the shock absorber piston, that is, it is possible to change the speed at which the suspension returns to the balance position; and
- Rheological shock absorber, whose operation involves the use of rheological fluids, that is, fluids which exhibit a variable viscosity based on a suitable electric and/or magnetic field (also called electro-rheological and magneto-rheological shock absorbers).

Said shock absorbers, both mechanical and electronic, find their application to several industrial fields, such as the automotive industry, the motorcycle industry, the industry of agricultural machines, the rail-way vehicles industry, domestic appliances industry and similar.

US 5 390 121 discloses a control method for damper wherein the damping states are selected via a driver selectable switch.

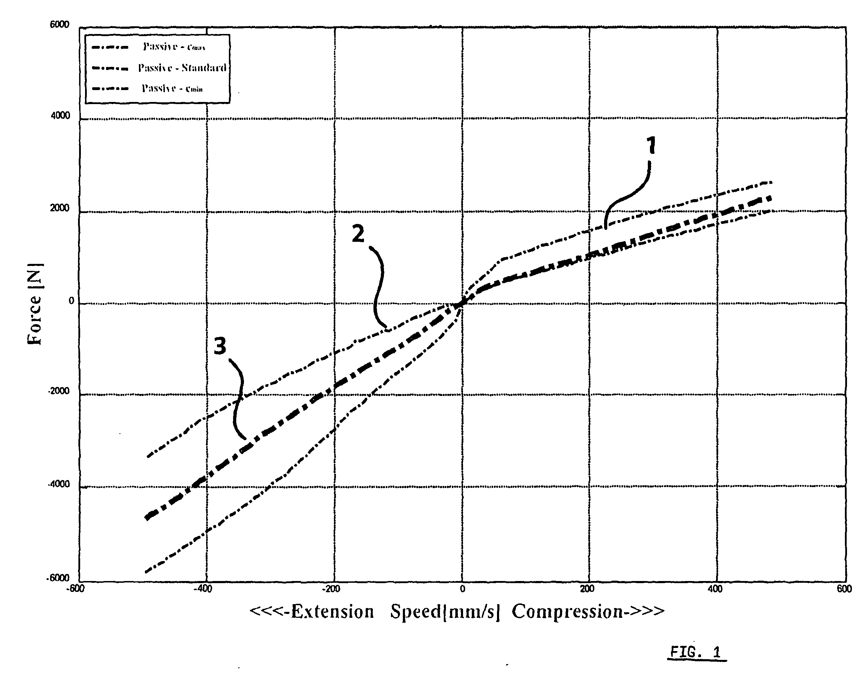

For example, with reference to figure 1, in the plane of the stroke speed with respect to the force, three different damping curves of a mechanical shock absorber are shown.

In particular in this plane:
- The reference numeral 1 denotes a damping curve representing the maximum capability cₘₐₓ of damping of the mechanical shock absorber;
- The reference numeral 2 denotes a damping curve representing the minimum capability cₘᵢₙ of damping of the shock absorber; and
- The reference numeral 3 a possible damping curve of the mechanical shock absorber selected by the manufacturer and included between the damping curve 1, representing the maximum capability cₘₐₓ of damping and the damping curve 2, representing the minimum capability cₘᵢₙ of damping.

In other words, in said figure 1, it is shown one of the possible curves (that is the damping curve 3) which could be chosen by the manufacturer, in relation to the specific application which said mechanical damper is dedicated to.

To vary the damping curve 3 of the mechanical shock absorber chosen by the manufacturer, it is necessary to act on the mechanical controls of the shock absorber, if available; otherwise, as borderline case, it is necessary to change the shock absorber with another.

The possibility to adjust the damping curve of a mechanical shock absorber by the means of ring nuts or whatever always increases the complexity of the same shock absorber and it often involves the disadvantage of device redesign.

Thus to change the type of damping curve, that is the type of shock absorber setting, it is necessary the manufacturer to act on it with additional costs of new tuning and redesign.

It is worth noticing that in the case of electronic shock absorber the same problem arises as well.

In fact, even though the electronic shock absorbers normally available on the market allow the user to change the damping curve as function of user's needs and/or the user's way of driving, for example by acting on a graphic interface appropriately designed, however such shock absorbers allow to choose only among few possible damping curves.

Furthermore, it is worth pointing out that such damping curves are all previously selected by the manufacturer.

Thus the user has the possibility to choose only among the damping curves stored in the electronic control unit of the electronic shock absorber.

In view of the prior art described above, the object of the present invention is to provide a method and a system which should be capable of solving the problems and the drawbacks found in the prior art herein reported.

In accordance to the present invention, such object is achieved by a method and a system for allowing a user to set a damping curve of an electronic shock absorber, for example, of a ground vehicle in accordance to the claim 1 and claim 13, respectively. Such object is also achieved by an electronic programmable shock absorber in accordance to the claim 17.

Thanks to the present invention is possible to obtain a method for allowing a user to set a damping curve of an electronic shock absorber within the structural limits of operation of the same shock absorber, since the damping curve is created by the user and not by the manufacturer of the shock absorber.

Therefore it is possible to allow the user to set and store in the electronic shock absorber the damping curve in accordance with the user's personal needs and sensitivity (damping curve for high and/or low comfort level, damping curves with high and/or low level of stiffness with respect the damping curves designed by the manufacturer) and/or in accordance with the specific application where the shock absorber is involved (ground vehicles, appliances, etc.).

This allows the user to set an infinite number of damping curves without the necessity of implementing mechanical regulations and/or electronic regulations and not even of replacing the shock absorber.

Furthermore, thanks to the present invention it is possible to obtain a simplification of the mechanical devices of the electronic shock absorbers since the diversification of the damping curve is obtained by a step of uploading some representative parameters of the new damping curve into the electronic control unit of the shock absorber, such parameters are chosen by the user within the limits of maximum and minimum damping of the same shock absorber.

This guarantees the user and the shock absorber manufacturer to replicate known damping curves, developed for a specific shock absorber, for example a mechanical one, in any electronic shock absorber, compatibly with the requirements of the application.

In other words, the present invention allows to set into an electronic shock absorber a damping curve developed for another shock absorber, so that such damping curve is replicated in the same electronic shock absorber.

Thanks to the present invention it is also possible to obtain a programmable shock absorber capable of receiving, storing and actuating, whenever the user likes, a damping curve chosen and designed by the same user (or by the manufacturer) in accordance with the personal needs.

Furthermore, thanks to the present invention it is possible to fully neglect the vehicle dynamics, since the present inventions concerns only the dynamic of the electronic shock absorber.

In particular, measuring appropriately the dynamic of compression and/or rebound of the electronic shock absorber and on the basis of such measurement it is possible to actuate a control signal for replicating a damping curve which has been defined by the user.

It is worth noticing that in accordance with the present invention the electronic shock absorber can be also used in a semi-active way, by adding the specific control software implementing the dynamics control, for example, of the ground vehicle.

Finally, but not less important, thanks to the present invention by a software product stored in the memory of a computer and running on such computer, it is possible to allow a user to actuate the method in accordance with the present invention.

The features and the advantages of the present invention will appear more clearly from the following detailed description of some practical embodiments thereof, made by way of a non-limiting example with reference to the annexed drawing, wherein:
- figure 1 shows typical damping curves of a mechanical shock absorber;
- figure 2 shows a schematic view of the system allowing a user to set a damping curve of an electronic shock absorber for a ground vehicle, in accordance to the present invention;

- figure 3 shows more in details a possible graphic interface to allow a user to set a damping curve of an electronic shock absorber, in accordance with the present invention;
- figure 4 shows a flow chart of the control of the electronic shock absorber. With reference to the annexed drawings from 2 to 4, the reference numeral 4 denotes a system for allowing a user to set at least one damping curve 5A, 5B in an electronic shock absorber 6 for a ground vehicle (not reported in the figures).

It is worth noticing that the electronic shock absorber 6 is an electronic shock absorber which finds application particularly, but not exclusively, to a semi-active suspension, which can be used, for example, in the automotive industry, in the motorcycle industry, in the industry of agricultural machines, in the rail vehicles industry, in the industry of domestic appliances and similar.

Advantageously, the system 4 comprises:
- An electronic shock absorber 6 provided by an electronic control unit 7 (ECU), which is devoted to the control of the compression and/or rebound dynamics of the same electronic shock absorber 6, and
- A computer client 8 having at least one processor, one memory associated to the said at least one processor, one screen and a software product 9 which may be uploaded into said memory.

In particular, the electronic control unit 7 comprises:
- an interface of connection 10 for establishing a bidirectional signal communication between the computer client 8 and the same electronic control unit 7,
- a memory 15,
- an interface of connection 18 for establishing a bidirectional signal communication between the electronic shock absorber 6 and the same electronic control unit 7, and
- means for computing 17 equipped with a firmware to rule and manage the functionalities of the previous devices constituting the electronic control unit.

In a preferred realization, the electronic control unit 7 may be embedded into the electronic shock absorber 6, so that a smaller room is required.

Alternatively, the electronic control unit 7 may be realized as a device external to the same electronic shock absorber 6.

It is worth noticing that the electronic shock absorber 6 comprises one or more devices of regulation (not illustrated in the drawings) to control the dynamic of compression and/or rebound of the electronic shock absorber 6 controlled by the electronic control unit 7.

In fact, as described more clearly in the rest of the description. The electronic control unit 7 is capable of controlling the above devices of regulation, such as electro-valves, for actuating the damping curve 5A,5B in order to control the dynamics of rebound and/or compression of the electronic shock absorber 6 by a data transfer thanks to the interface of connection 18.

Advantageously, the software product 9 is capable of implementing a method which accordingly allows a user to set at least a damping curve 5A,5B in the electronic shock absorber 6.

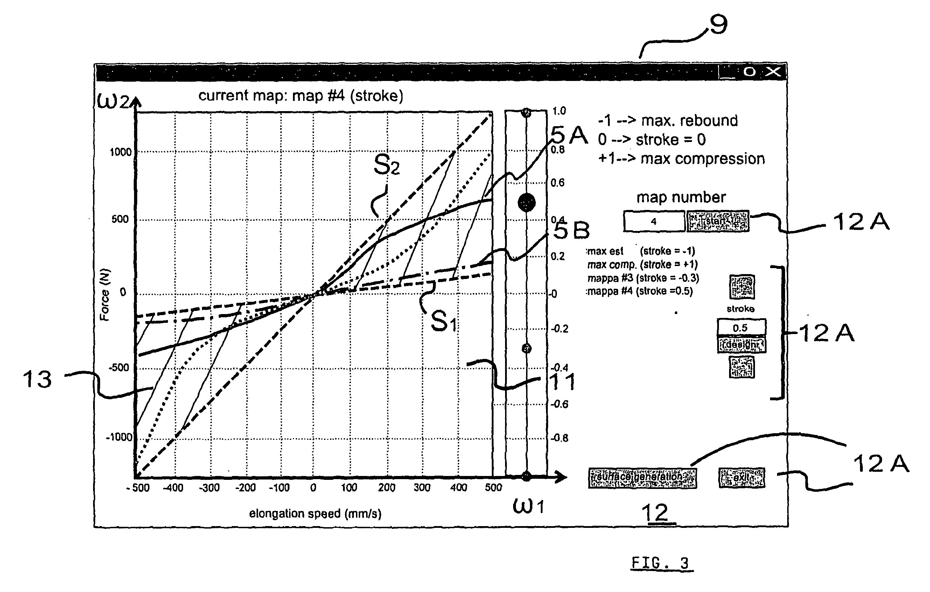

To this end, also with reference to figure 3, the method comprises the following step:
- providing a model reference 11 of the typical parameters corresponding to the electronic shock absorber 6, wherein the model reference 11 comprises a first set of values S1 denoting the minimum capability of damping cₘᵢₙ of said electronic shock absorber 6, and a second set of values S2 denoting the maximum capability of damping cₘₐₓ of said electronic shock absorber 6,
- receiving a user input or an input signal Sin into the computer client 8, wherein the user input Sin provides at least one characteristic parameter ω₁ , ω₂ of the electronic shock absorber 6, wherein the at least one characteristic parameter ω₁ , ω₂ is defmed with respect to a model reference 11,
- computing said at least one characteristic parameter ω₁ , ω₂ so that at least a new damping curve 5A,5B is generated,
- using the new damping curve 5A,5B in the electronic control unit 7 to control the electronic shock absorber 6 of the ground vehicle.

It is worth noticing that the step of receiving a user input Sin into the computer client 8 comprises also the following step:
- Interpolating at least one characteristic parameter ω_{1 ,} ω₂ denoting the damping capability of the electronic shock absorber 6 so that a new damping curve 5A,5B is generated in order to have said new damping curve 5A,5B included between:
- Said first set of values S 1 denoting the minimum capability of damping c_{min ,} and
- Said second set of values S2 denoting the maximum capability of damping cₘₐₓ of said electronic shock absorber 6.

Advantageously, hence, by interpolating the values represented by the input signal S1, the method generates the new damping curve 5A,5B, which is a control source code for the electronic control unit 7.

In particular, as it will be detailed more clearly in the rest of the description, such control source code is uploaded into the memory 15 of the electronic control unit 7 and it is used by the firmware of the means for computing 17 to control the devices of regulation with the aim of implementing the damping curve 5A,5B, so that it is possible to manage the dynamics of compression and/or rebound of the electronic shock absorber. 6.

It is worth noticing that the step of interpolating is implemented by methods based polynomial interpolation or based on spline, according to the specific requirements of the application to which the electronic shock absorber 6 is dedicated.

In particular, the at least one characteristic parameters ω₁ , ω₂ denoting the damping capability of the electronic shock absorber 6, is , for example, the rebound stroke speed w1 as a function of the compression force ω₂ , or viceversa.

Alternatively, it is possible to choose different characteristic parameters according to the specific requirements of the application.

With reference to figure 3, it is worth remarking that, according the preferable embodiment of the present invention, the step of providing a model reference 11 of the characteristic parameters ω₁ , ω₂ for the electronic shock absorber 6 comprises also the following steps:
- Showing a control panel 12 on the graphical interface of said computer client 8;
- Showing said model reference 11 on the control panel 12.

In particular, the control panel 12 of the software product 9 is, for example, implemented by a Cartesian coordinate system, where the x-axes represents the stroke speed expressed as mm/sec and the y-axes represents the force expressed in Newton; in such control panel implemented by a Cartesian coordinate system, a first default damping curve is the first set of values S1 denoting the minimum capability of damping cₘᵢₙ of the electronic shock absorber 6.

Similarly, a second default damping curve is the second set of values S2 denoting the maximum capability of damping cₘₐₓ of the electronic shock absorber 6.

It is worth noticing that the first default damping curve and the second default damping curve define an area 13 which represents the set of characteristic points which the user may choose to set the new damping curve 5A,5B.

In other words, the area 13 defines the all points available for the user to set a new damping curve 5A,5B, in accordance to the characteristics of the electronic shock absorber.

In particular, the user selects the points in the area 13 as he likes, by the means of specific functional buttons 12Aof the control panel 12of the software product 9; the software product 9 interpolates said points selected by the user according to the user's specific requirements in order to set the new damping curve 5A,5B.

For example, the user may choose or insert the representative value if signal Sin by the means of specific functional buttons 12A of the control panel 12; the signal Sin hence corresponds to one point or more of the area 13.

Each of such points of the area 13 corresponds to specific values of the characteristic parameters ω₁ , ω₂; such points selected by the user are interpolated in order to generate a control source code which implements, for example, the damping curve 5A or the damping curve 5B.

For example, whether the user selects only a point in the area 13, the method generates by interpolation a damping curve 5A,5B which is a straight line passing in the origin of Cartesian coordinate system.

It appears evident that the precision of the generated damping curve 5A,5B increases with respect to the number of points selected by the user in the area 13.

Therefore, whether the user aims at replicating a damping curve of mechanical shock absorber, whose tuning, for example, is considered as the best tuning for specific requirements of comfort or of grip, or alternatively whether the user aims at setting new damping curves according to their personal needs, the user has the possibility to choose or select a set of points in the area 13 which are interpolated to generate one or more damping curves 5A,5B.

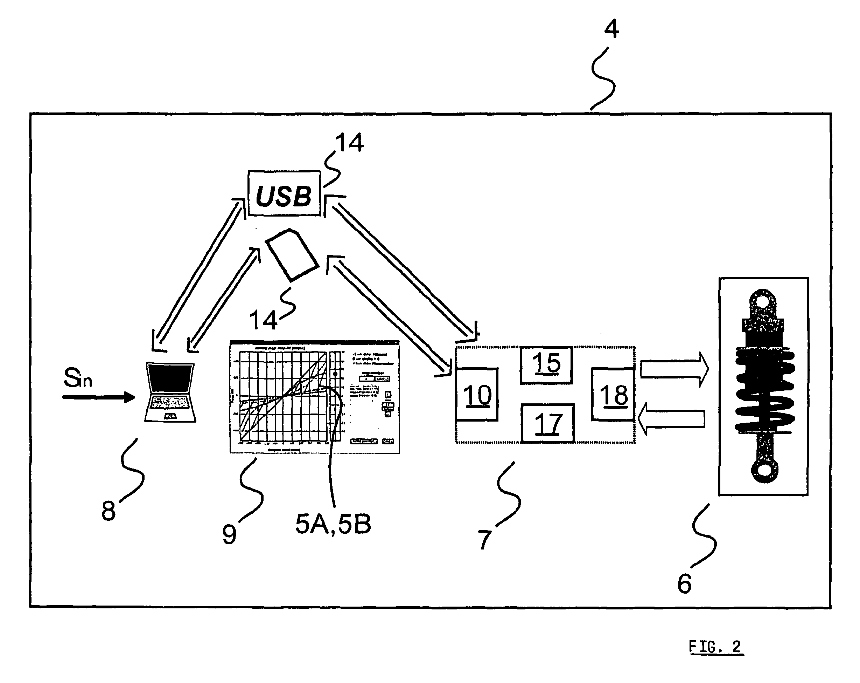

To this end, with reference to figure 2, in the method the step of using a new damping curve 5A or 5B in said electronic control unit 7 comprises additional steps for establishing a bidirectional signal communication based on wireless communication, on a portable storage memory 14, or a wired communication.

In particular, in the preferable embodiment, the bidirectional signal communication is implemented by the portable storage memory 14.

In this embodiment, the method comprises the following step:
- Storing the new damping curve 5A and/or 5B in the portable storage memory 14,
- Associating the portable storage memory 14 to the bidirectional interface 10 of the electronic control unit 7 of said electronic shock absorber,
- Uploading the new damping curve 5A and/or 5B in part of the memory 15 of the electronic control unit 7 of the electronic shock absorber 6.

It is worth noticing that the bidirectional interface 10 may be embedded in the electronic control unit 7 or may be located, for example in the ground vehicle, in a place visible for the user.

In particular, in the preferable embodiment, the firmware of the means for computing 17 is able to auto-execute the control source code representing the damping curve 5A,5B generated by the software product 9.

In other words, the control source code representing the damping curve 5A,5B is uploaded automatically in the memory 15 and is auto-executed by the means for computing 17.

In a preferable embodiment the portable storage memory 14 is a pendrive, that is a USB key normally available on the market.

Alternatively, the portable storage memory 14 is a memory card port devoted to a MMC card, or it is a hard disk.

Alternatively, the step of using the new damping curve 5A and/or 5B in the memory 15 of the electronic shock absorber 7 may be a cable interconnection such as serial connection or RS32 connection.

Alternatively, the step of using the new damping curve 5A and/or 5B in the memory 15 of the electronic shock absorber 7 may be a wireless connection by the means of a transceiver wireless module.

It appears evident the advantage for the user. In fact, the user may set, generate and store in the pendrive 14 the personal damping curve 5A and/or 5B; furthermore the user may associate the pendrive 14 to the interface 10 if the electronic control unit 7 of the electronic shock absorber in order to set a new damping curve without any action by the manufacturer or by the mechanical tuner.

It is worth noticing that the method includes also the possibility of downloading the damping curve stored in the memory 15 of the electronic control unit 7 of the electronic shock absorber 6 in order to depict said damping curve in the graphical interface 12 of said computer client 8.

The step of downloading the damping curve stored in the memory 15, in particular, consist in a logging of the data representing the damping curve currently stored, for example, in the portable storage memory 14 which was previously associated to the interface 10 of the electronic control unit 7.

In this case the functionality of telemetry is included, that is a functionality devoted to receive and interpret the data from the electronic control unit 7 by the interface 12.

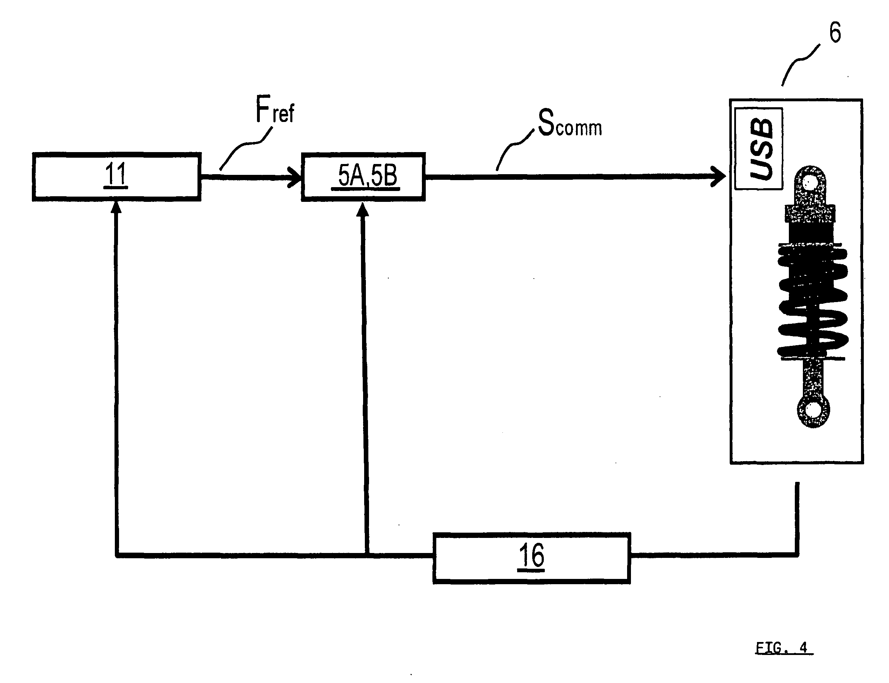

With reference to figure 4, which shows a flowchart of the control functionalities of the electronic shock absorber 6, it is interesting to notice that, first thanks to the graphical interface 12 the user sets the new damping curve 5A and/or 5B according to the model reference 11 of the characteristic parameters w1 , w2 ; then such new damping curve is uploaded thanks, for example, to the association of the portable storage memory 14 to the interface of communication 10 of the electronic control unit 7; finally thanks to the presence of one or more sensors of dynamic 16, when it is used, the dynamic of the shock absorbers 6 is logged or monitored.

For example, sensors of dynamic 16 are force/stroke-speed sensors such as one accelerometer or one potentiometer in communication with the means of computing 17 by the interface of connection 18 of the electronic control unit 7.

A reference single F_ref is generated according to the measurement made by said sensors 16 and according to the model reference 11 of the characteristics parameters ω₁ , ω₂ corresponding the electronic shock absorber 6.

Furthermore, the firmware of the means of computing 17 generates a command signal Scomm according to the measurement made by the said sensors 16 and according to the damping curve 5A and/or 5B set by the user; such command signal Scomm is capable of controlling the devices of regulation of the electronic shock absorber 6 by the interface 18.

In other words, the electronic control unit 7 generates the command signal Scomm as function of the force reference F_ref and of the damping curve 5A,5B set by the user and as function of the shock absorber dynamics measured by the sensors 16; such command signal Scomm approximates at best both the damping curve 5A and/or 5B, set by the user, included at the same time in the area 13 as defined by the model reference 11.

Preferably, the signal Scomm generated by the electronic control unit 7 is a current signal.

Therefore, first the user design the new damping curve 5A and/or 5B of the electronic shock absorber 6 by inserting the input Sin thanks to the graphical interface 12; it is worth remarking that the input Sin denotes the characteristic parameters ω₁, , ω₂ representing the damping capability of the electronic shock absorber 6; then, by interpolating the values represented by the input Sin, the method generates the control source code for the electronic control unit so that the electronic shock absorber 6 behaves according to the requirements set by the user.

Such control source code (that is the damping curve 5) is store, for example, in a pendrive 14 which is associated to the interface 10 of the electronic control unit 7; the means of computing 17 of the electronic control unit 7 interpret and execute such control source code and manage the electronic shock absorber 6 with the command signal Scomm in order to command electronic such shock absorber 6 according also to the data measured by the dynamic sensors 16.

The electronic control unit 7, in fact, measures the dynamics of the shock absorber by said sensors 16 and as a consequence it sets a damping as function of the damping curve 5A and/or 5B uploaded into the memory 15.

Thanks to the present invention the advantages and the goals previously mentioned and particularly introduced in the abstract are achieved.

Particularly, it is also possible to change the damping curve of the programmable shock absorber whenever the user likes without the intervention of the manufacturer with additional costs

Of course, a man skilled in the art may make several changes ad adjustments to the configurations described above in order to meet specific and incidental needs, all falling within the scope of the protection defined in the following claims

## Claims

1. Method for allowing a user to set a damping curve (5A,5B) of an electronic shock absorber (6) for a vehicle by a computer client (8), said electronic shock absorbers (6) comprising an electronic control unit (7) able to communicate with said computer client (8) and one or more control of regulation controlled by said electronic control unit (7) in order to actuate said damping curve (5A,5B),
the method comprising the step of:
- providing a model reference (11) of characteristic parameters (ω_{1,}ω₂) corresponding to the way of working of the electronic shock absorber (6), said reference model (11) comprising a first set (S1) of values denoting of the minimum capability of damping of said electronic shock absorber (6) and a second set (S2) of values denoting the maximum capability of damping of said electronic shock absorber (6), **characterized by the fact** of comprising the further steps of:
- showing a control panel (12) on a graphic interface (9) of a software product resident on said computer client (8),
- showing said model reference (11) on the control panel (12), wherein said first set (S1) of values denoting of the minimum capability of damping of said electronic shock absorber (6) is represented by a first line and a second set of values denoting the maximum capability of damping of said electronic shock absorber (6) is represented by a second line, wherein said first line and said second line include an area (13) which defines the all points available for the user to set said new damping curve (5A,5B),
- receiving an user input (Sin) in the computer client (8) for selecting at least a point in said area (13), such selected at least one point (13) corresponding to specific values of characteristic parameter (ω_{1,}ω₂) denoting the capability of damping of said electronic shock absorber (6), said at least one characteristic parameter (ω_{1,}ω₂) being defined according to the model reference (11),
- computing said at least one selected point to generate said at least one new damping curve (5A,5B),
- using said at least one new damping curve (5A,5B) into said electronic control unit (7) in order to control the electronic shock absorber (6).

2. Method according to the claim 1, wherein said step of computing s said at least one selected point, comprises the further step of interpolating said at least one characteristic parameter (ω_{1,}ω₂)denoting the capability of damping of said electronic shock absorber to generate said new damping curve (5A,5B), so that said new damping curve (5A,5B) is comprised between said first set (S1) of values denoting of the minimum capability of damping of said electronic shock absorber (6) and a second set (S2) of values denoting the maximum capability of damping of said electronic shock absorber (6).

3. Method according to claims 1 or 2, wherein said step of using said new damping curve (5A,5B) in said electronic control unit (7) to control said electronic shock absorber (6) comprises the further steps of:
- establishing a bidirectional wireless communication, or a wired communication, or a communication via a portable storage memory (14) between said computer client (8) and said electronic control unit (7) of said electronic shock absorber (6),
- uploading said new damping curve (5A,5B) in a memory (15) of said electronic control unit (7) of said electronic shock absorber (6).

4. Method according to claim 3, wherein said step of establishing a bidirectional communication via a portable storage memory (14) comprises the further steps of:
- storing said new damping curve (5A,5B) in said portable storage memory (14),
- associating said portable storage memory to an interface of connection (10) of said electronic control unit (7) of said electronic shock absorber (6).
- uploading said new damping curve (5A,5B) in a part of a memory (15) of said electronic control unit (7) of said electronic shock absorber (6), and
- executing said new damping curve (5A,5B).

5. Method according to claims 3 or 4, wherein said step of establishing a bidirectional communication comprises the further steps of:
- associating said portable storage memory (14) to said electronic control unit (7) of said electronic shock absorber (6) via an interface of connection (10).
- downloading the damping curve stored ion said memory (15) of said electronic control unit (7) of said electronic shock absorber (6) into said portable storage memory (14);
- associating said portable storage memory (14) with said computer (8) to depict said damping curve stored in said memory (15) in the graphical interface (12) of said computer client (8).

6. Method according to the claims 3 to 5, wherein said portable storage memory (14) is a pendrive, a memory card or a hard disk.

7. Method according to 3, wherein said step of establishing a wireless bidirectional communication comprises the further step of downloading the damping curve stored in said memory (15) of said electronic control unit (7) of said electronic shock absorber (6) into said computer client (8) to depict said damping curve stored in said memory (15) in said graphical interface (12) of said computer client (8).

8. Method according to claim 3, wherein after said new damping curve (5A,5B) is uploaded in said memory (15) of said electronic control unit (7) of said electronic shock absorber (6), the method comprises the further steps of:
- detecting the dynamic of said electronic shock absorber (6) when on use, and on the basis of said detection:
- generating a reference signal (F_ref) as function of said model reference (11), said reference signal (F_ref) being representative of the characteristic parameter (ω_{1,}ω₂) denoting the capability of damping of said electronic shock absorber. (6).
- generating a command signal (Scomm) to command said electronic shock absorber (6), said command signal (Scomm) being a combination between said reference signal (F_ref), said damping curve (5A,5B), set by the user, and said dynamic of the electronic shock absorber.

9. Method according to claims 1 to 8, wherein said at least one characteristic parameter (ω_{1,}ω₂) denoting the capability of damping of said electronic shock absorber (6) is the stroke speed (ω₁) as function of the of the compression force (w2) or viceversa.

10. Software product for computing at least one characteristic parameter (ω₁,ω₂) as function of a model reference (11) of characteristic parameters corresponding of an electronic shock absorber (6) to generate a new damping curve (5A,5B) for said electronic shock absorber (6), said reference model (11) comprising a first set (S1) of values denoting of the minimum capability of damping of said electronic shock absorber (6) and a second set of values denoting the maximum capability of damping of said electronic shock absorber (6), said software product being uploaded in the memory of a computer (8), comprising parts of the source code implementing the method according to any claim from 1 to 9 while being running on said computer.

11. System for allowing a user to set a damping curve (5A,5B) of an electronic shock absorber (6), said system comprising an electronic shock absorber (6) and an electronic control unit (7) for controlling said electronic shock absorber (6), the system **characterized by the fact** of comprising:
- a computer (8) being suitable for elaborating at least one characteristic parameter (ω₁,ω₂)as function of a model reference (11) of the characteristic parameters corresponding of an electronic shock absorber (6) to generate a new damping curve (5A,5B) for said electronic shock absorber (6), said computer (8) being suitable for establishing a signal communication with the electronic control unit (7) of said electronic shock absorber (6), said computer (8) having at least one processor, one memory associated with said at least one processor, one display and one software product that may be uploaded in said memory, said software product being according to claim 10.

12. System according to claim 11, wherein said electronic control unit (7) comprises an interface of bidirectional communication (10) for connecting said computer (8) to said electronic control unit (7), another interface of bidirectional connection (18) for establishing a signal communication between the electronic shock absorber (6) to said electronic control unit (7), a memory (15) for storing said new damping curve (5A,5B) and means of computing (17).

13. System according to claim 12, wherein said bidirectional interface (10) is a port, said port is:
- a usb port of a usb pendrive (14), or
- a port for a memory card, or
- a serial port for an hard disk.
- a port for a communication by wire.

14. System according to claim 12, wherein said interface of bidirectional communication (10) is wireless transceiver module.

15. Programmable electronic shock absorber (6) comprising an electronic control unit (7), said programmable electronic shock absorber (6) **characterized by** the fact of comprising:
- first interface of bidirectional communication means (10) for receiving a damping curve (5A,5B), said damping curve (5A,5B) being defined by a user thanks to a software product according to claim 10,
- a memory (15) for storing said new damping curve (5A,5B), and
- means of computing (17) for actuating and executing said damping curve (5A,5B)
- second interface of bidirectional communication means (18) for establishing a bidirectional signal communication between the electronic shock absorber (6) and the same electronic control unit (7).

16. Programmable electronic shock absorber (6) according to claim 15, comprising at least one sensor (16) for detecting the dynamic of said programmable electronic shock absorber when on use and another interface of connection (18) for establishing a bidirectional signal communication between the electronic shock absorber (6) and said electronic control unit (7), said at least one sensor (16) communicating said detected measure to said electronic control unit (7).

17. Programmable electronic shock absorber according to claim 15, wherein said interface of bidirectional communication is a port suitable to be associated to a pendrive (14), to a hard disk, to a memory card, or to a communication by wire.

18. Programmable electronic shock absorber according to claim 15, wherein said interface of communication (10) is a wireless transceiver module.

19. Programmable electronic shock absorber according to claim 15, wherein said electronic control unit (7) is embedded into said electronic shock absorber (6).

## Patentansprüche

1. Verfahren, durch das ein Benutzer eine Dämpfungskennlinie (5A, 5B) eines elektronischen Stoßdämpfers (6) für ein Fahrzeug mit einem Computer-Client (8) einstellen kann, wobei die elektronischen Stoßdämpfer (6) eine elektronische Steuereinheit (7), die mit diesem Computer-Client (8) kommunizieren kann, und eine oder mehrere von der elektronischen Steuereinheit (7) gesteuerte Einstellsteuerungen umfassen, um diese Dämpfungskennlinie (5A, 5B) umzusetzen,
wobei das Verfahren den folgenden Schritt umfasst:
- Bereitstellen eines Referenzmodells (11) von charakteristischen Parametern (ω₁,ω₂)das der Arbeitsweise des elektronischen Stoßdämpfers (6) entspricht, wobei das Referenzmodell (11) einen ersten Satz (S1) von Werten, die das geringste Dämpfungsvermögen des elektronischen Stoßdämpfers (6) angeben, und einen zweiten Satz (S2) von Werten umfasst, die das größte Dämpfungsvermögen des elektronischen Stoßdämpfers (6) angeben,
**dadurch gekennzeichnet, dass** es die folgenden weiteren Schritte umfasst:
- Anzeigen eines Kontrollfelds (12) auf einer grafischen Benutzeroberfläche (9) eines Softwareprodukts, das in dem Computer-Client (8) resident ist,
- Anzeigen des Referenzmodells (11) auf dem Kontrollfeld (12), wobei der erste Satz (S1) von Werten, die das geringste Dämpfungsvermögen des elektronischen Stoßdämpfers (6) angeben, durch eine erste Linie dargestellt wird, und ein zweiter Satz von Werten, die das größte Dämpfungsvermögen des elektronischen Stoßdämpfers (6) angeben, durch eine zweite Linie dargestellt wird, wobei diese erste Linie und diese zweite Linie eine Fläche (13) einschließen, die alle Punkte definiert, die dem Benutzer zum Einstellen der neuen Dämpfungskennlinie (5A, 5B) zur Verfügung stehen,
- Empfangen einer Benutzereingabe (Sin) im Computer-Client (8) zum Auswählen von mindestens einem Punkt in der Fläche (13), wobei der derart ausgewählte mindestens eine Punkt (13) spezifischen Werten des charakteristischen Parameters (ω_{1,} ω₂) entspricht, der das Dämpfungsvermögen des elektronischen Stoßdämpfers (6) angibt, wobei dieser mindestens eine charakteristische Parameter (ω₁, ω₂)gemäß dem Referenzmodell (11) definiert ist,
- Berechnen dieses mindestens einen ausgewählten Punkts, um die mindestens eine neue Dämpfungskennlinie (5A, 5B) zu erzeugen,
- Verwenden dieser mindestens einen neuen Dämpfungskennlinie (5A, 5B) in der elektronischen Steuereinheit (7), um den elektronischen Stoßdämpfer (6) zu steuern.

2. Verfahren nach Anspruch 1, bei dem der Schritt des Berechnens des mindestens einen ausgewählten Punkts den weiteren Schritt des Interpolierens des mindestens einen charakteristischen Parameters (ω₁, ω₂) umfasst, der das Dämpfungsvermögen des elektronischen Stoßdämpfers angibt, um die neue Dämpfungskennlinie (5A, 5B) derart zu erzeugen, dass diese neue Dämpfungskennlinie (5A, 5B) zwischen dem ersten Satz (S1) von Werten, die das geringste Dämpfungsvermögen des elektronischen Stoßdämpfers (6) angeben, und einem zweiten Satz (S2) von Werten eingeschlossen ist, die das größte Dämpfungsvermögen des elektronischen Stoßdämpfers (6) angeben.

3. Verfahren nach Anspruch 1 oder 2, bei dem der Schritt des Verwendens der neuen Dämpfungskennlinie (5A, 5B) in der elektronischen Steuereinheit (7) zum Steuern des elektronischen Stoßdämpfers (6) die folgenden weiteren Schritte umfasst:
- Herstellen einer bidirektionalen drahtlosen Kommunikation oder einer drahtgeführten Kommunikation oder einer Kommunikation mittels einer tragbaren Speichereinrichtung (14) zwischen dem Computer-Client (8) und der elektronischen Steuereinheit (7) des elektronischen Stoßdämpfers (6),
- Heraufladen der neuen Dämpfungskennlinie (5A, 5B) in einen Speicher (15) der elektronischen Steuereinheit (7) des elektronischen Stoßdämpfers (6).

4. Verfahren nach Anspruch 3, bei dem der Schritt des Herstellens einer bidirektionalen Kommunikation mittels einer tragbaren Speichereinrichtung (14) die folgenden weiteren Schritte umfasst:
- Speichern der neuen Dämpfungskennlinie (5A, 5B) in der tragbaren Speichereinrichtung (14),
- Verbinden der tragbaren Speichereinrichtung mit einer Verbindungsschnittstelle (10) der elektronischen Steuereinheit (7) des elektronischen Stoßdämpfers (6),
- Heraufladen der neuen Dämpfungskennlinie (5A, 5B) in einen Teil eines Speichers (15) der elektronischen Steuereinheit (7) des elektronischen Stoßdämpfers (6), und
- Ausführen der neuen Dämpfungskennlinie (5A, 5B).

5. Verfahren nach Anspruch 3 oder 4, bei dem der Schritt des Herstellens einer bidirektionalen Kommunikation die folgenden weiteren Schritte umfasst:
- Verbinden der tragbaren Speichereinrichtung (14) mit der elektronischen Steuereinheit (7) des elektronischen Stoßdämpfers (6) über eine Verbindungsschnittstelle (10),
- Herunterladen der in diesem Speicher (15) der elektronischen Steuereinheit (7) des elektronischen Stoßdämpfers (6) gespeicherten Dämpfungskennlinie in die tragbare Speichereinrichtung (14);
- Verbinden der tragbaren Speichereinrichtung (14) mit dem Computer (8), um die in dem Speicher (15) gespeicherte Dämpfungskennlinie auf der grafischen Benutzeroberfläche (12) des Computer-Clients (8) darzustellen.

6. Verfahren nach den Ansprüchen 3 bis 5, bei dem die tragbare Speichereinrichtung (14) ein USB-Stick, eine Speicherkarte oder eine Festplatte ist.

7. Verfahren nach Anspruch 3, bei dem der Schritt des Herstellens einer drahtlosen bidirektionalen Kommunikation den weiteren Schritt des Herunterladens der in dem Speicher (15) der elektronischen Steuereinheit (7) des elektronischen Stoßdämpfers (6) gespeicherten Dämpfungskennlinie in den Computer-Client (8) umfasst, um die in dem Speicher (15) gespeicherte Dämpfungskennlinie auf der grafischen Benutzeroberfläche (12) des Computer-Clients (8) darzustellen.

8. Verfahren nach Anspruch 3, wobei das Verfahren nach dem Heraufladen der neuen Dämpfungskennlinie (5A, 5B) in den Speicher (15) der elektronischen Steuereinheit (7) des elektronischen Stoßdämpfers (6) die folgenden weiteren Schritte umfasst:
- Erfassen der Dynamik des elektronischen Stoßdämpfers (6) während seines Gebrauchs, und auf der Basis dieser Erfassung:
- Erzeugen eines Bezugssignals (F_ref) als Funktion des Referenzmodells (11), wobei dieses Bezugssignal (F_ref) den charakteristischen Parameter (ω₁, ω₂) repräsentiert, der das Dämpfungsvermögen des elektronischen Stoßdämpfers (6) angibt,
- Erzeugen eines Steuersignals (Scomm) zum Steuern des elektronischen Stoßdämpfers (6), wobei dieses Steuersignal (Scomm) eine Kombination zwischen dem Bezugssignal (F_ref), der vom Benutzer eingestellten Dämpfungskennlinie (5A, 5B) und der Dynamik des elektronischen Stoßdämpfers ist.

9. Verfahren nach Anspruch 1 bis 8, bei dem der mindestens eine charakteristische Parameter (ω₁, ω₂)der das Dämpfungsvermögen des elektronischen Stoßdämpfers (6) angibt, die Hubgeschwindigkeit (ω₁) als Funktion der Druckkraft (w2) oder umgekehrt ist.

10. Softwareprodukt zum Berechnen von mindestens einem charakteristischen Parameter (ω₁, ω₂) als Funktion eines Referenzmodells (11) von charakteristischen Parametern, das einem elektronischen Stoßdämpfer (6) entspricht, um eine neue Dämpfungskennlinie (5A, 5B) für diesen elektronischen Stoßdämpfer (6) zu erzeugen, wobei das Referenzmodell (11) einen ersten Satz (S1) von Werten, die das geringste Dämpfungsvermögen des elektronischen Stoßdämpfers (6) angeben, und einen zweiten Satz von Werten umfasst, die das größte Dämpfungsvermögen des elektronischen Stoßdämpfers (6) angeben, wobei das Softwareprodukt, das in den Speicher eines Computers (8) hochgeladen wird, Teile des Quellcodes umfasst und das Verfahren nach einem der Ansprüche 1 bis 9 implementiert, während es auf dem Computer ausgeführt wird.

11. System, durch das ein Benutzer eine Dämpfungskennlinie (5A, 5B) eines elektronischen Stoßdämpfers (6) einstellen kann, wobei dieses System einen elektronischen Stoßdämpfer (6) und eine elektronische Steuereinheit (7) zum Steuern dieses elektronischen Stoßdämpfers (6) umfasst, wobei das System **dadurch gekennzeichnet ist, dass** es Folgendes umfasst:
- einen Computer (8), der mindestens einen charakteristischen Parameter (ω₁, ω₂) als Funktion eines Referenzmodells (11) der charakteristischen Parameter, das einem elektronischen Stoßdämpfer (6) entspricht, verarbeiten kann, um eine neue Dämpfungskennlinie (5A, 5B) für diesen elektronischen Stoßdämpfer (6) zu erzeugen, wobei dieser Computer (8) geeignet ist, um eine Signalkommunikation mit der elektronischen Steuereinheit (7) des elektronischen Stoßdämpfers (6) herzustellen, wobei dieser Computer (8) mindestens einen Prozessor, einen mit dem mindestens einen Prozessor verbundenen Speicher, eine Anzeige und ein Softwareprodukt aufweist, das in diesen Speicher heraufgeladen werden kann, wobei das Softwareprodukt gemäß Anspruch 10 ausgeführt ist.

12. System nach Anspruch 11, bei dem die elektronische Steuereinheit (7) eine Schnittstelle für eine bidirektionale Kommunikation (10) zum Verbinden des Computers (8) mit der elektronischen Steuereinheit (7), eine weitere Schnittstelle für eine bidirektionale Verbindung (18) zum Herstellen einer Signalkommunikation zwischen dem elektronischen Stoßdämpfer (6) und der elektronischen Steuereinheit (7), einen Speicher (15) zum Speichern der neuen Dämpfungskennlinie (5A, 5B) und Rechenmittel (17) umfasst.

13. System nach Anspruch 12, bei dem die bidirektionale Schnittstelle (10) ein Anschluss ist, wobei dieser Anschluss Folgendes ist:
- ein USB-Anschluss für einen USB-Stick (14), oder
- ein Port für eine Speicherkarte, oder
- ein serieller Anschluss für eine Festplatte,
- ein Anschluss für eine drahtgeführte Kommunikation.

14. System nach Anspruch 12, bei dem die Schnittstelle für die bidirektionale Kommunikation (10) ein drahtloses Transceiver-Modul ist.

15. Programmierbarer elektronischer Stoßdämpfer (6), der eine elektronische Steuereinheit (7) umfasst, wobei dieser programmierbare elektronische Stoßdämpfer (6) **dadurch gekennzeichnet ist, dass** er Folgendes umfasst:
- erste Mittel (10) für eine Schnittstelle für eine bidirektionale Kommunikation zum Empfangen einer Dämpfungskennlinie (5A, 5B), wobei diese Dämpfungskennlinie (5A, 5B) von einem Benutzer mit Hilfe eines Softwareprodukts nach Anspruch 10 festgelegt wird,
- einen Speicher (15) zum Speichern dieser neuen Dämpfungskennlinie (5A, 5B), und
- Rechenmittel (17) zum Umsetzen und Ausführen dieser Dämpfungskennlinie (5A, 5B),
- zweite Mittel (18) für eine bidirektionale Kommunikation zum Herstellen einer bidirektionalen Signalkommunikation zwischen dem elektronischen Stoßdämpfer (6) und derselben elektronischen Steuereinheit (7).

16. Programmierbarer elektronischer Stoßdämpfer (6) nach Anspruch 15, der mindestens einen Sensor (16) zum Erfassen der Dynamik dieses programmierbaren elektronischen Stoßdämpfers während seines Gebrauchs und eine weitere Verbindungsschnittstelle (18) zum Herstellen einer bidirektionalen Signalkommunikation zwischen dem elektronischen Stoßdämpfer (6) und der elektronischen Steuereinheit (7) umfasst, wobei der mindestens eine Sensor (16) den erfassten Messwert an die elektronische Steuereinheit (7) übermittelt.

17. Programmierbarer elektronischer Stoßdämpfer nach Anspruch 15, bei dem die Schnittstelle für die bidirektionale Kommunikation ein Anschluss ist, der mit einem USB-Stick (14), einer Festplatte, einer Speicherkarte oder einer drahtgeführten Kommunikationseinrichtung verbunden werden kann.

18. Programmierbarer elektronischer Stoßdämpfer nach Anspruch 15, bei dem die Kommunikationsschnittstelle (10) ein drahtloses Transceiver-Modul ist.

19. Programmierbarer elektronischer Stoßdämpfer nach Anspruch 15, bei dem die elektronische Steuereinheit (7) in den elektronischen Stoßdämpfer (6) eingebettet ist.

## Revendications

1. Procédé pour permettre à un utilisateur d'établir une courbe d'amortissement (5A, 5B) d'un amortisseur électronique (6) pour un véhicule par un ordinateur client (8), lesdits amortisseurs électroniques (6) comprenant une unité de commande électronique (7) capable de communiquer avec ledit ordinateur client (8) et une ou plusieurs commandes de régulation contrôlées par ladite unité de commande électronique (7) de manière à mettre en oeuvre ladite courbe d'amortissement (5A, 5B),
le procédé comprenant l'étape consistant à :
- fournir une référence de modèle (11) de paramètres caractéristiques (ω₁, ω₂) correspondant à la course de travail de l'amortisseur électronique (6), ladite référence de modèle (11) comprenant un premier ensemble (S1) de valeurs indiquant la capacité minimale d'amortissement dudit amortisseur électronique (6) et un deuxième ensemble (S2) de valeurs indiquant la capacité maximale d'amortissement dudit amortisseur électronique (6),
**caractérisé en ce qu'**il comprend les étapes ultérieures consistant à :
- présenter un tableau de commande (12) sur une interface graphique (9) d'un produit de logiciel résident sur ledit ordinateur client (8),
- présenter ladite référence de modèle (11) sur le tableau de commande (12), dans lequel ledit premier ensemble (S1) de valeurs indiquant la capacité minimale d'amortissement dudit amortisseur électronique (6) est représenté par une première ligne et un deuxième ensemble de valeurs indiquant la capacité maximale d'amortissement dudit amortisseur électronique (6) est représenté par une deuxième ligne, dans lequel ladite première ligne et ladite deuxième ligne comprennent une zone (13) qui définit la totalité des points disponibles pour l'utilisateur pour établir ladite nouvelle courbe d'amortissement (5A, 5B),
- recevoir une entrée d'utilisateur (Sin) dans l'ordinateur client (8) pour sélectionner au moins un point dans ladite zone (13), un tel au moins un point sélectionné (13) correspondant à des valeurs spécifiques de paramètre caractéristique (ω₁, ω₂) indiquant la capacité d'amortissement dudit amortisseur électronique (6), ledit au moins un paramètre caractéristique (ω₁, ω₂)étant défini en fonction de la référence de modèle (11),
- calculer ledit au moins un point sélectionné pour générer ladite au moins une nouvelle courbe d'amortissement (5A, 5B),
- utiliser ladite au moins une nouvelle courbe d'amortissement (5A, 5B) dans ladite unité de commande électronique (7) de manière à commander l'amortisseur électronique (6).

2. Procédé selon la revendication 1, dans lequel ladite étape de calcul dudit au moins un point sélectionné comprend l'étape ultérieure d'interpolation dudit au moins un paramètre caractéristique (ω₁, ω₂) indiquant la capacité d'amortissement dudit amortisseur électronique pour générer ladite nouvelle courbe d'amortissement (5A, 5B), de manière que ladite nouvelle courbe d'amortissement (5A, 5B) est comprise entre ledit premier ensemble (S1) de valeurs indiquant la capacité minimale d'amortissement dudit amortisseur électronique (6) et ledit deuxième ensemble de valeurs (S2) indiquant la capacité maximale d'amortissement dudit amortisseur électronique (6).

3. Procédé selon les revendications 1 ou 2, dans lequel ladite étape d'utilisation de ladite nouvelle courbe d'amortissement (5A, 5B) dans ladite unité de commande électronique (7) pour commander ledit amortisseur électronique (6) comprend les étapes ultérieures consistant à :
- établir une communication sans fil bidirectionnelle, ou une communication par câble, ou une communication via une mémoire de stockage portable (14) entre ledit ordinateur client (8) et ladite unité de commande électronique (7) dudit amortisseur électronique (6),
- télécharger ladite nouvelle courbe d'amortissement (5A, 5B) dans une mémoire (15) de ladite unité de commande électronique (7) dudit amortisseur électronique (6).

4. Procédé selon la revendication 3, dans lequel ladite étape d'établissement d'une communication bidirectionnelle via une mémoire de stockage portable (14) comprend les étapes ultérieures consistant à :
- stocker ladite nouvelle courbe d'amortissement (5A, 5B) dans ladite mémoire de stockage portable (14),
- associer ladite mémoire de stockage portable à une interface de connexion (10) de ladite unité de commande électronique (7) dudit amortisseur électronique (6),
- télécharger ladite nouvelle courbe d'amortissement (5A, 5B) dans une partie d'une mémoire (15) de ladite unité de commande électronique (7) dudit amortisseur électronique (6), et
- exécuter ladite nouvelle courbe d'amortissement (5A, 5B).

5. Procédé selon les revendications 3 ou 4, dans lequel ladite étape d'établissement d'une communication bidirectionnelle comprend les étapes ultérieures consistant à :
- associer ladite mémoire de stockage portable (14) à ladite unité de commande électronique (7) dudit amortisseur électronique (6) via une interface de connexion (10),
- télécharger la courbe d'amortissement stockée dans ladite mémoire (15) de ladite unité de commande électronique (7) dudit amortisseur électronique (6) dans ladite mémoire de stockage portable (14) ;
- associer ladite mémoire de stockage portable (14) audit ordinateur (8) pour représenter ladite courbe d'amortissement stockée dans ladite mémoire (15) dans l'interface graphique (12) dudit ordinateur client (8).

6. Procédé selon les revendications 3 à 5, dans lequel ladite mémoire de stockage portable (14) est une clé USB, une carte de mémoire ou un disque dur.

7. Procédé selon la revendication 3, dans lequel ladite étape d'établissement d'une communication bidirectionnelle sans fil comprend l'étape ultérieure consistant à télécharger la courbe d'amortissement stockée dans ladite mémoire (15) de ladite unité de commande électronique (7) dudit amortisseur électronique (6) dans ledit ordinateur client (8) pour représenter ladite courbe d'amortissement stockée dans ladite mémoire (15) dans ladite interface graphique (12) dudit ordinateur client (8).

8. Procédé selon la revendication 3, dans lequel, après que ladite nouvelle courbe d'amortissement (5A, 5B) est téléchargée dans ladite mémoire (15) de ladite unité de commande électronique (7) dudit amortisseur électronique (6), le procédé comprend les étapes ultérieures consistant à :
- détecter la dynamique dudit amortisseur électronique (6) quand il est en service, et sur la base de ladite détection :
- générer un signal de référence (F_ref) comme une fonction de ladite référence de modèle (11), ledit signal de référence (F_ref) étant représentatif du paramètre caractéristique (ω₁, ω₂) indiquant la capacité d'amortissement dudit amortisseur électronique (6),
- générer un signal de commande (Scomm) pour commander ledit amortisseur électronique (6), ledit signal de commande (Scomm) étant une combinaison entre ledit signal de référence (F_ref), ladite courbe d'amortissement (5A, 5B), établie par l'utilisateur, et ladite dynamique de l'amortisseur électronique.

9. Procédé selon les revendications 1 à 8, dans lequel ledit au moins un paramètre caractéristique (ω₁, ω₂) indiquant la capacité d'amortissement dudit amortisseur électronique (6) est la vitesse de déplacement (ω₁) en fonction de la force de compression (w2) ou inversement.

10. Produit de logiciel pour calculer au moins un paramètre caractéristique (ω₁, ω₂) comme une fonction d'une référence de modèle (11) de paramètres caractéristiques correspondant à un amortisseur électronique (6) pour générer une nouvelle courbe d'amortissement (5A, 5B) pour ledit amortisseur électronique (6), ledit modèle de référence (11) comprenant un premier ensemble (S1) de valeurs indiquant la capacité minimale d'amortissement dudit amortisseur électronique (6) et un deuxième ensemble de valeurs indiquant la capacité maximale d'amortissement dudit amortisseur électronique (6), ledit produit de logiciel étant téléchargé dans la mémoire d'un ordinateur (8), comprenant des parties du code source mettant en oeuvre le procédé selon l'une quelconque des revendications 1 à 9 lorsqu'il est exécuté sur ledit ordinateur.

11. Système pour permettre à un utilisateur d'établir une courbe d'amortissement (5A, 5B) d'un amortisseur électronique (6), ledit système comprenant un amortisseur électronique (6) et une unité de commande électronique (7) pour commander ledit amortisseur électronique (6), le système étant **caractérisé en ce qu'**il comprend :
- un ordinateur (8) étant adapté pour élaborer au moins un paramètre caractéristique (ω₁, ω₂) comme une fonction d'une référence de modèle (11) des paramètres caractéristiques correspondant à un amortisseur électronique (6) pour générer une nouvelle courbe d'amortissement (5A, 5B) pour ledit amortisseur électronique (6), ledit ordinateur (8) étant adapté pour établir une communication de signal avec l'unité de commande électronique (7) dudit amortisseur électronique (6), ledit ordinateur (8) comportant au moins un processeur, une mémoire associée audit au moins un processeur, un affichage et un produit de logiciel qui peut être téléchargé dans ladite mémoire, ledit produit de logiciel étant selon la revendication 10.

12. Système selon la revendication 11, dans lequel ladite unité de commande électronique (7) comprend une interface de communication bidirectionnelle (10) pour connecter ledit ordinateur (8) à ladite unité de commande électronique (7), une autre interface de connexion bidirectionnelle (18) pour établir une communication de signal entre l'amortisseur électronique (6) et ladite unité de commande électronique (7), une mémoire (15) pour stocker ladite nouvelle courbe d'amortissement (5A, 5B) et des moyens de calcul (17).

13. Système selon la revendication 12, dans lequel ladite interface bidirectionnelle (10) est un port, ledit port est :
- un port USB pour une clé USB (14), ou
- un port pour une carte de mémoire, ou
- un port série pour un disque dur,
- un port pour une communication par câble.

14. Système selon la revendication 12, dans lequel ladite interface de communication bidirectionnelle (10) est un module émetteur-récepteur sans fil.

15. Amortisseur électronique programmable (6) comprenant une unité de commande électronique (7), ledit amortisseur électronique programmable (6) étant **caractérisé en ce qu'**il comprend :
- des premiers moyens d'interface de communication bidirectionnelle (10) pour recevoir une courbe d'amortissement (5A, 5B), ladite courbe d'amortissement (5A, 5B) étant définie par un utilisateur grâce à un produit de logiciel selon la revendication 10,
- une mémoire (15) pour stocker ladite nouvelle courbe d'amortissement (5A, 5B), et
- des moyens de calcul (17) pour mettre en oeuvre et exécuter ladite courbe d'amortissement (5A, 5B),
- des deuxièmes moyens d'interface de communication bidirectionnelle (18) pour établir une communication de signal bidirectionnelle entre l'amortisseur électronique (6) et la même unité de commande électronique (7).

16. Amortisseur électronique programmable (6) selon la revendication 15, comprenant au moins un capteur (16) pour détecter la dynamique dudit amortisseur électronique programmable quand il est en service et une autre interface de connexion (18) pour établir une communication de signal bidirectionnelle entre l'amortisseur électronique (6) et ladite unité de commande électronique (7), ledit au moins un capteur (16) communiquant ladite mesure détectée à ladite unité de commande électronique (7).

17. Amortisseur électronique programmable selon la revendication 15, dans lequel ladite interface de communication bidirectionnelle est un port adapté pour être associé à une clé USB (14), à un disque dur, à une carte de mémoire ou à une communication par câble.

18. Amortisseur électronique programmable selon la revendication 15, dans lequel ladite interface de communication (10) est un module émetteur-récepteur sans fil.

19. Amortisseur électronique programmable selon la revendication 15, dans lequel ladite unité de commande électronique (7) est incorporée dans ledit amortisseur électronique (6).
